# EUROPEAN PATENT SPECIFICATION

(11) **EP 1 189 503 B1**
(45) Date of publication and mention of the grant of the patent: **08.01.2003**
(21) Application number: 00945043.8
(22) Date of filing: 30.06.2000
(51) Int. Cl.: A01M 1/20

(54) **INSECTICIDAL BAIT DISPENSING SYSTEM**
INSEKTENKÖDERABGABEVORRICHTUNG
SYSTEME DISTRIBUTEUR D'APPAT INSECTICIDE

(30) Priority: 02.07.1999 US 142091 P
(43) Date of publication of application: 27.03.2002
(73) Proprietor: S. C. Johnson & Son, Inc., Racine, WI 53403 (US)
(72) Inventor: ADAMS, Mary, Beth, Gurnee, IL 60031 (US); COUCH, James, S., Powell, OH 43065 (US); ABEREGG, Dale, Mount Vernon, OH 43050 (US); JAWORSKI, Thomas, Racine, WI 53402 (US); DAVIS, Brian, T., Burlington, WI 53105 (US); MANDELL, Jonathan, N., Gurnee, IL 60031 (US); MAJEROWSKI, Amelia, H., Kenosha, WI 53140 (US)
(74) Representative: Ruschke, Hans Edvard, Dipl.-Ing.
(86) International application number: US0018088
(87) International publication number: WO01001769

(56) References cited:
- US-A- 2 808 679
- US-A- 3 828 464
- US-A- 4 285 468

## Description

### CROSS-REFERENCE TO RELATED APPLICATIONS

This application claims priority from Unites States Provisional Patent Application No. 60/142,091, filed July 2, 1999.

### BACKGROUND OF THE INVENTION

The present invention relates to insect control and, more particularly, relates to an insecticidal bait dispenser.

The invasion of buildings by roaches and other insects is highly undesirable. Various methods and systems have been previously introduced in an attempt to control this problem. One approach uses a bait/insecticide mixture to attract the roach or other insect and that will kill the insect upon ingestion of the mixture (or a short time period thereafter).

For example, U.S. patent 2,808,679 discloses an insecticidal bait tape that is adhesively secured to, for example, a floor. As a result, insects, typically traveling in a column, will be exposed to the insecticide and consequently exterminated after ingestion of the bait

In U.S. patent 5,564,222 a wooden bait stake is disclosed having a tapered end that is inserted into soil or the like. Termites burrowing through the soil will ingest terminicide in the stake and die.

However, prior techniques did not allow a bait pesticide to be easily mounted in hard to reach areas, such as, for example, corners of a room or on sidewalls of cupboards. Additionally, the methods described above are labor intensive, and may cause the user to come in contact with the insecticide. What is therefore needed is a system for easily and safely securing an insecticide in a hard to reach area in a safe and efficient manner.

### BRIEF SUMMARY OF THE INVENTION

In accordance with a first aspect of the invention, an insecticidal bait dispenser has an elongated housing having a base for dispensing a bait pellet against a mounting surface. The housing includes a base end, and at least one elongated sidewall extending therefrom, an open end, and an elongated inner cavity. A plurality of stacked insecticidal bait pellets are disposed within the cavity. Adjacent pellets are mechanically connected to one another (e.g. by an adhesive). The housing further includes an actuator that is configured to cause a sliding of at least a portion of an outermost pellet of the stack outwardly from the open end. This exposes at least a first face of the outermost pellet that is configured to be connected to the mounting surface. That pellet is subsequently broken away from the stack.

In accordance with another aspect of the invention, a method is provided for mounting an insecticidal bait pellet using the dispenser described above. Specifically, the method includes contacting the outermost pellet with the mounting surface so as to position the pellet thereon, and subsequently breaking off the outermost pellet from the dispenser.

In the detailed description below, preferred embodiments of the invention will be described with reference to the accompanying drawings. These embodiments do not represent the full scope of the invention. Rather the invention may be employed in other embodiments, and reference should therefore be made to the claims herein for interpreting the breadth of the invention.

### BRIEF DESCRIPTION OF THE DRAWINGS

Fig. 1 is a perspective view of a "punch and stick" bait dispenser constructed in accordance with the invention;
Fig. 2A is a sectional view of the bait dispenser of Fig. 1 taken along line 2A-2A;
Fig. 2B is a sectional view of the bait dispenser of Fig. 2A taken along line 2B-2B;
Fig. 2C is a sectional view of the bait dispenser of Fig. 2B taken along line 2C--2C;
Fig. 3 is a sectional view of the dispenser of Fig. 1 (similar to the right hand portion of Fig. 2A) showing the outermost pellet being attached to a mounting surface;
Fig. 4 is a sectional view of the bait dispenser of Fig. 3, showing the outermost pellet attached to the mounting surface and cracked apart from the stack;
Fig. 5A is a sectional view similar to Fig. 2A, but having disposed therein a different stack of insecticidal bait pellets;
Fig. 5B is a sectional view of the dispenser of Fig. 5A similar to Fig. 4, showing the outermost pellet attached to the mounting surface and cracked apart from the stack;
Fig. 6 is a view similar to Fig. 5B, but with insecticidal bait pellets constructed in accordance with a third alternate embodiment of the invention;
Fig. 7A is a perspective view of another bait dispenser having disposed therein a stack of insecticidal bait pellets constructed in accordance with yet another embodiment of the invention;
Fig. 7B is a sectional view of the bait dispenser of Fig. 7A taken along line 7B--7B, showing the outermost pellet attached to the mounting surface and cracked apart from the stack;
Fig. 7C is a top plan view of a further modified pellet;
Fig. 8 is a sectional view of the dispenser having disposed therein a stack of insecticidal bait pellets constructed in accordance with another embodiment of the invention;
Fig. 9A is a perspective view of a bait dispenser constructed in accordance with an alternate embodiment and having disposed therein a stack of insecticidal bait pellets with their narrow end projecting outward;
Fig. 9B is a sectional view of the bait dispenser of Fig. 9A taken along line 9B-9B, showing the outermost pellet attached to the mounting surface and cracked apart from the stack; and
Fig. 10 is a perspective view of a stack of pellets constructed in accordance with an alternate embodiment, suitable for use in a comer.

### DETAILED DESCRIPTION OF THE INVENTION

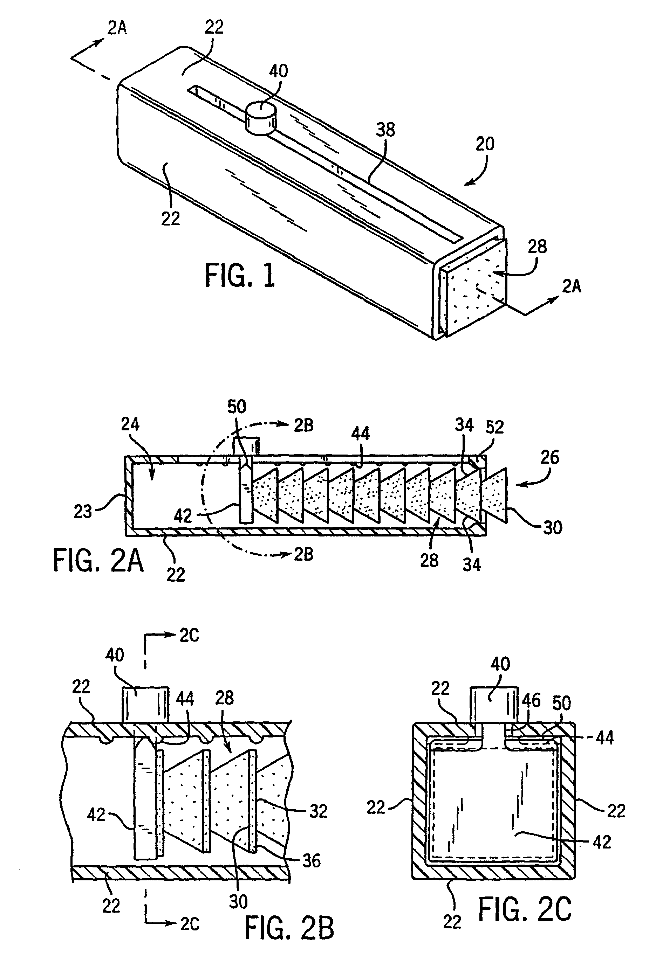

Referring initially to Figs. 1 and 2A-2C, a bait dispenser 20 includes elongated side walls 22 that are connected to an inner wall 23 so as to form a cavity 24 having a series of stacked insecticidal bait pellets 28 disposed therein. The term pellet here is used in its broadest sense, and is not limited to a pill shape. The dispenser 20 preferably is made of a plastic material but may be formed from any other suitable material. Each bait pellet 28 includes a first face 30 configured to be attached to a mounting surface such as wall 54 by a punch, stick, and breakoff process, and a second face 32 that is connected to the first face by angled walls 34. In one form, the second face has a smaller cross-section than the first face. The first face 30 of each pellet 28 is coated with (or impregnated with) an adhesive 36, for example a rubber cement-type cold adhesive, and abuts the second face 32 of an adjacent pellet 28, thereby forming a releasable bond between adjacent pellets so as to form the stack 26.

In one form, an elongated slot 38 extends through one of the walls 22 and provides an opening that facilitates a connection between an outer knob 40 and inner base plate 42 via a shaft 46. The shaft 46 is integral with the base plate 42 and extends through the slot 38 to connect the base plate to the screw or knob 40. The outwardly facing surface of base plate 42 is coated with the adhesive 36 so as to attach to the second face 32 of the bottommost pellet 28. A plurality of detents 44 are formed in wall 22 on either side of the slot 38 and are spaced according to the distance between adjacent first faces 30 of each pellet 28. The base plate further includes an inner wall presenting a beveled outer edge 50 that is configured to interfere with the detents 44.

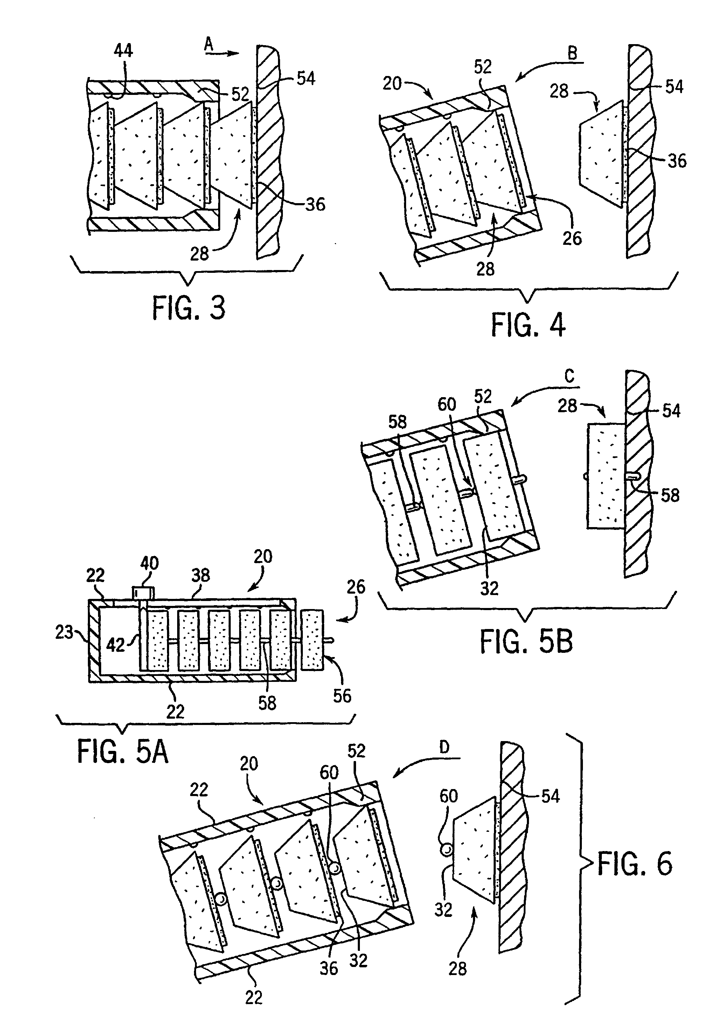

Referring now to Figs. 3 and 4, the bait dispenser 20 is operated by manually actuating the peg 40 outwardly such that the beveled edge 50 clicks past the next detent 44 so as to expose at least the first face 30 of the outermost pellet 28 and bring the first face of the pellet adjacent the outermost pellet into contact with an optional inner flange 52 that extends inwardly from the top of walls 22. Accordingly, the first face 30 of the outermost pellet 28 is brought axially into contact with a room wall 54 in the general direction of arrow A, thereby creating a bond between the pellet and the wall via adhesive 36.

The user will then crack the outermost pellet from the stack 26 by jerking the dispenser 20 with respect to the outermost pellet 28 and in the general direction shown by arrow B in Fig. 4. Because the bond between the pellet 28 and the wall 54 presents a greater surface area than the bond between adjacent pellets, and because of the added leverage provided by flange 52, the outermost pellet 28 will crack apart from the stack 26 with a simple jerk of the wrist by the user, thereby rotating the dispenser as shown generally by arrow B. The dispenser 40 is then moved away from the wall as shown in Fig. 4, once the pellet 28 has been affixed to the wall. This process may be rapidly repeated until all pellets 28 have been used, at which time a new stack of pellets may be inserted into the dispenser so that the second face 32 of the bottommost pellet is once again connected to base plate 42. The user can therefore easily punch and stick bait stations on a variety of surfaces (e.g. the back of a drawer).

In one embodiment, each solid base pellet 28 comprises approximately 81.6% water by weight, 15% sugar or corn sweetener by weight, 2% boric acid by weight, 1.2 carageenan by weight, and 0.2% preservative (such as the preservative commercially available from Rohm and Haas, and sold under the tradename Legend MK) by weight. In operation, the sugar or corn sweetener will attract the roach to the pellet 28, and the boric acid will poison the roach upon ingestion. During processing, the formula is mixed and shaped according to the desired ultimate shape of the pellet 28 and is subsequently allowed to solidify. A secondary process applies the adhesive to the surface of each pellet 28.

Referring now to Figs. 5A and 5B, the dispenser 20 is shown having a stack 26 of rectangular pellets 56 in accordance with an alternate embodiment of the invention. More particularly, the pellets 56 are separated from one another by pins 58 having notches 60 disposed therein and positioned adjacent the second face 32 of each pellet. In operation, the knob 40 is moved outwardly so as to expose the outermost pellet 56 as described above. The exposed outwardly extending pin 58 of the outermost pellet is then punched axially into the wall 54, and the dispenser is rotated about the notch 60 as shown generally by arrow C so as to crack the outermost pellet from the stack 26. The innermost pellet 56 is connected to the base plate 42 by an adhesive or other suitable connection.

Referring now to Fig. 6, connection of adjacent pellets 28 is different from that described above with reference to Figs. 1 and 2A-2C in that a bead 60 is connected to second face 32 of each pellet 28 and is connected to the first face 30 of each adjacent pellet via adhesive 36. As a result, when a pellet 28 is affixed to the wall 54, the bond to the wall will become significantly greater than the bond between the bead 60 and the adhesive 36 of the adjacent pellet due to the larger bonding surface. Accordingly, the outermost pellet 28, along with bead 60, is easily broken away from the stack 26 during operation by jerking the dispenser 20 in the general direction shown by arrow D.

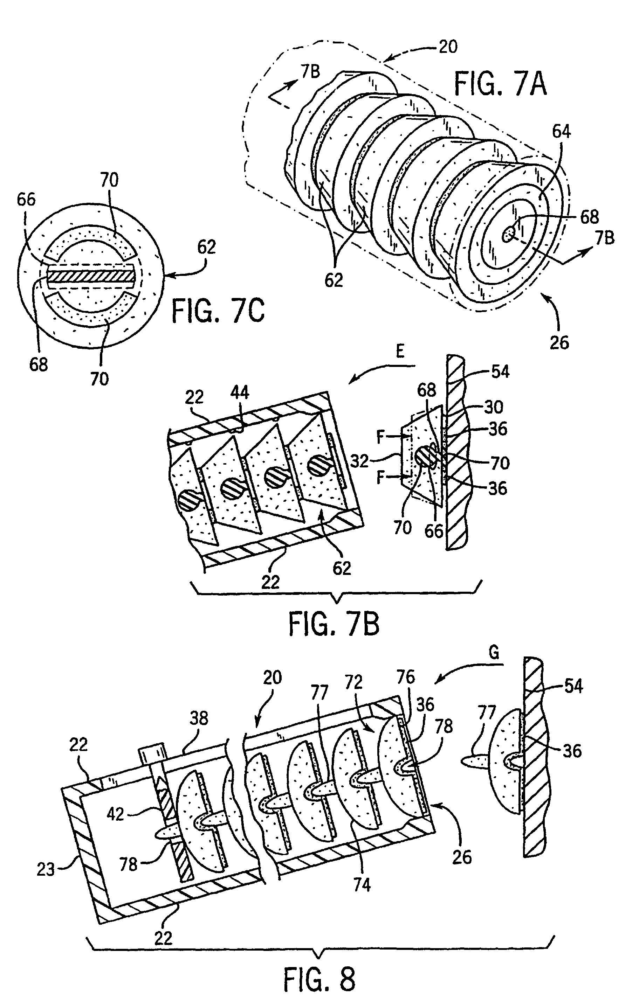

Referring next to Figs. 7a and 7b, the pellet dispenser 20 is annular and encloses therein a stack 26 of frusto-conical pellets 62 that are connected to one another via a ring of adhesive 64 that is disposed on the first face 30 of each pellet so as to bond with the second face 32 of each adjacent pellet. Each pellet 62 also has an inner chamber 66 that encloses a liquid adhesive 70 and includes an outlet 68 opening at the first face 30. Each pellet 62 is compressible such that, during installation on a wall, the outermost pellet 62 compresses when brought into contact with the wall 54, shown by arrows F, thereby squirting the adhesive 70 out of the cavity 66 and onto the first face 30 to create a stronger bond between the pellet 62 and the wall as compared to the bond between adjacent pellets. This additional bond strength allows the outermost pellet 62 to be cracked apart from the stack 26 after attachment to the wall 54, as shown generally by arrow E.

Referring now also to Fig. 7C, the inner chamber 66 is illustrated as being elongated with a corresponding elongated outlet channel 68. In order to accommodate the additional space occupied by the chamber 66, the adhesive is applied in two generally arc-shaped sections 70, thereby decreasing the bond strength between adjacent pellets 62 and more easily allowing the outermost pellet to be detached from the stack 26 during operation.

Referring to Fig. 8, the dispenser 20 encloses a stack 26 of insecticidal bait pellets 72 including a rounded second face 74 having nesting cones 77 extending outwardly therefrom, and a substantially flat first face 76 disposed opposite the second face and including a notch 78 disposed therein. First face 76 is coated with adhesive 36 so as to retain the nesting cone 77 of an adjacent pellet 72 within the notch 78. The base plate 42 has been slightly modified to include an annular slot 78 disposed therein and aligned with the nesting cone 77 of the innermost pellet 72 so as to receive the cone therein, and is further connected to the rounded wall 74 via an adhesive or any other suitable releasable mechanical connection.

In operation, the first face 76 of the outermost pellet 72 is exposed and brought into contact with the wall 54 and is affixed thereto via the adhesive 36. Because the bond between the pellet 72 and wall 54 is stronger then the bond between nesting cone 77 and notch 78 of the adjacent pellet 72, the dispenser may be rotated about the notch 78 adjacent the outermost pellet 72, as shown generally by arrow G, so as to break the pellet free from the stack 26.

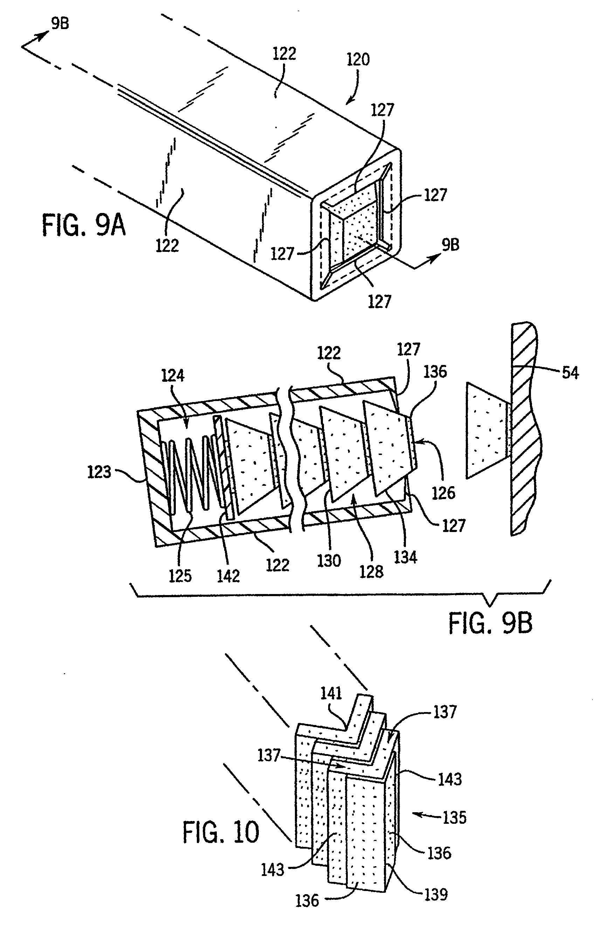

Referring to Figs. 9A and 9B, an insecticidal bait dispenser 120 in constructed accordance with an alternate embodiment of the invention is shown having reference numerals corresponding to like parts of dispenser 20 incremented by 100. In particular, a spring 125 is disposed within the inner cavity 124 and extends outwardly from the bottom wall 123 at one end, and is connected to an inner base plate 142 at its other end. The second face 132 of each pellet 128 is coated with adhesive 136 so as to connect to the first face 130 of an adjacent pellet. In this embodiment, the second face 132 may even present a larger surface area than the first face 130, as will be described in more detail below. The dispenser 120 further includes flexible catches 127 extending inwardly from the top of each side wall 122 so as to abut the angled walls 134 of the pellet 128 that is positioned adjacent the outermost pellet.

In operation, the spring 125 biases the stack 126 outwardly such that the face 132 and corresponding adhesive 136 are exposed as shown in Fig. 9A. While the force of the spring 125 is sufficient to expose the second face 132 of the outermost pellet 128, it is insufficient on its own to overcome the resistive force provided by catches 127. The face 132 is then brought into contact with the wall 54 or other mounting surface, and the dispenser 120 is pulled back away from the wall so that the catches 127 slip over the face 130 of the outermost pellet 128 and abut the angled wall 134 of the pellet adjacent the outermost pellet. A user may therefore apply pressure to the top of sidewalls 122, which will assist in breaking off the wall-mounted pellet from the stack when the dispenser is rotated by the user. Therefore, even though the bond between the outermost pellet and the wall 54 may not be as strong as the bond between adjacent pellets, the force provided by catches 127 facilitates the breaking away of the outermost pellet.

Referring to Fig. 10, a stack 126 of V-cross sectioned pellets 135 is constructed in accordance with an alternate embodiment of the invention. Specifically, the two V sections 137 are integrally connected and present an outer corner 139 and an inner corner 141. The V-shaped sections 137 present a first surface 143 that joins at the corner 139. Adhesive 136 is coated on a portion of both outer surfaces 143 adjacent the corner 139. Accordingly, the outermost pellet 135 may be mounted in a corner of a room, for example, and cracked away from the remaining stack using catches 127 as described above.

Other modifications of the present invention will become apparent to those skilled in the art from an examination of the above patent specification and drawings. For example, the invention is intended to encompass additional dispenser and pellet designs that are operable as described in the above specification. Further, the exact bait, adhesive, and insecticide formulae and are not critical. Therefore, other variations of the present invention may be made which wall within the scope of the following claims even though such variations were not specifically discussed above.

### INDUSTRIAL APPLICABILITY

The present invention provides bait dispensers for controlling insect populations.

## Claims

1. An insecticidal bait dispenser for dispensing a bait pellet against a mounting surface, the dispenser comprising:
an elongated housing having a base end, at least one elongated side wall extending therefrom, an open end, and an elongated inner cavity;
a plurality of stacked insecticidal bait pellets disposed within the cavity, wherein adjacent pellets are mechanically connected to one another; and
an actuator configured to cause a sliding of at least a portion of an outermost pellet of the stack outwardly from the open end so as to expose at least a first face of the outermost pellet that is configured to be connected to the mounting surface and subsequently broken away from the stack.

2. The dispenser as recited in claim 1, wherein the first face has an adhesive exposed thereon.

3. The dispenser as recited in claim 1, wherein the pellet further comprises a second face opposite the first face.

4. The dispenser as recited in claim 1, wherein at least one bait pellets has a rectangular cross section in its outermost and innermost surfaces.

5. The dispenser as recited in claim 1, wherein at least one bait pellets is frusto-conical.

6. The dispenser as recited in claim 3, wherein the second face has an adhesive bead thereon.

7. The dispenser as recited in claim 1, wherein a cone extends outwardly from a second face of at least one pellet that is opposite the first face, the cone being adhesively connected to a notch disposed within an adjacent pellet.

8. The dispenser as recited in claim 1, wherein at least one pellet comprises an inner cavity enclosing a liquid adhesive therein, the cavity having an outlet to a face of the pellet.

9. The dispenser as recited in claim 8, wherein pellet having the liquid adhesive is compressible so that upon compression the liquid adhesive will squirt out the pellet.

10. The dispenser as recited in claim 9, wherein the outlet comprises an elongated transverse slot.

11. The dispenser as recited in claim 1, wherein at least one pellet includes a pin extending outwardly from the first face which is configured to be inserted into the a face of an adjacent pellet.

12. The dispenser as recited in claim 11, wherein the pin extending from the outermost pellet is configured to be attached to the mounting surface.

13. The dispenser as recited in claim 1, wherein at least one pellet comprises rubber cement-type cold adhesive.

14. The dispenser as recited in claim 1, wherein the actuator comprises a spring for pushing the stack outward through the open end.

15. The dispenser as recited in claim 1, wherein at least one of the pellets has a v-shaped cross section.

16. A method for mounting an insecticidal bait pellet to a mounting surface, comprising:
providing a dispenser of claim 1;
contacting the outermost pellet in the stack of that dispenser with the mounting surface so as to position it thereon; and
subsequently breaking off the outermost pellet from the stack.

## Patentansprüche

1. Insektizid-Köder-Abgabevorrichtung zur Abgabe eines Köder-Pellets auf eine Anbringungsfläche, mit:
einem langgestreckten Gehäuse mit einem Basisende, mindestens einer vom Basisende ab sich erstreckenden langgestreckten Seitenwand, einem offenen Ende und einem langgestreckten Innenraum,
einer Vielzahl von im Innenraum gestapelten Insektizid-Köder-Pellets, wobei aneinander grenzende Pellets mechanisch miteinander verbunden sind, und
einem Betätigungselement, das so konfiguriert ist, dass mit ihm mindestens ein Teil eines äußersten Pellets des Stapels aus dem offenen Ende heraus schiebbar und dabei mindestens eine erste Stirnfläche des äußersten Pellets freilegbar ist, das mit der Anbringungsfläche verbindbar und anschließend vom Stapel abbrechbar gestaltet ist.

2. Abgabevorrichtung nach Anspruch 1, bei dem die erste Stirnfläche mit einem dort offen liegenden Klebstoff versehen ist.

3. Abgabevorrichtung nach Anspruch 1, bei dem das Pellet weiterhin eine von der ersten abgewandte zweite Stirnfläche aufweist.

4. Abgabevorrichtung nach Anspruch 1, bei der mindestens ein Köder-Pellet in seinen innersten und äußersten Stirnflächen einen rechteckigen Querschnitt hat.

5. Abgabevorrichtung nach Anspruch 1, bei der mindestens ein Köder-Pellet kegelstumpfförmig ist.

6. Abgabevorrichtung nach Anspruch 3, bei der die zweite Stirnfläche eine Klebstoffraupe trägt.

7. Abgabevorrichtung nach Anspruch 1, bei der sich ein Kegel nach auswärts von einer zweiten Fläche von wenigstens einem Pellet gegenüber der ersten Fläche erstreckt, wobei der Kegel mit einer Kerbe in einem angrenzenden Pellet klebend verbunden ist.

8. Abgabevorrichtung nach Anspruch 1, bei der mindestens ein Pellet einen Innenraum aufweist, der einen flüssigen Klebstoff umschließt und eine Austrittsöffnung zu einer Stirnfläche des Pellets hin aufweist.

9. Abgabevorrichtung nach Anspruch 8, bei der das den flüssigen Klebstoff enthaltende Pellet komprimierbar ist, so dass beim Komprimieren der flüssige Klebstoff aus dem Pellet ausspritzt.

10. Abgabevorrichtung nach Anspruch 9, bei der die Austrittsöffnung ein quer verlaufendes Langloch ist.

11. Abgabevorrichtung nach Anspruch 1, bei der mindestens ein Pellet einen Stift aufweist, der aus der ersten Stirnfläche heraus vorsteht und in eine Stirnfläche eines angrenzenden Pellets einführbar konfiguriert ist.

12. Abgabevorrichtung nach Anspruch 11, bei der der aus dem äußersten Pellet vorstehende Stift an die Anbringungsfläche ansetzbar konfiguriert ist.

13. Abgabevorrichtung nach Anspruch 1, bei der mindestens ein Pellet einen Gummizement-Kaltklebstoff aufweist.

14. Abgabevorrichtung nach Anspruch 1, dessen Betätigungselement eine Feder ist, mit der der Stapel durch das offene Ende hindurch nach außen drückbar ist.

15. Abgabevorrichtung nach Anspruch 1, bei der mindestens eines der Pellets einen V-förmigen Querschnitt hat.

16. Verfahren zum Ansetzen eines Insektizid-Köder-Pellets an eine Anbringungsfläche, bei dem man
eine Abgabevorrichtung nach Anspruch 1 bereit stellt,
das äußerste Pellet im Stapel dieser Abgabevorrichtung an die Anbringungsfläche in der Sollage ansetzt, und
danach das äußerste Pellet vom Stapel abbricht.

## Revendications

1. Distributeur d'appât insecticide destiné à distribuer une pastille d'appât contre une surface de montage, le distributeur comprenant :
un boîtier allongé ayant une extrémité de base, au moins une paroi latérale allongée s'étendant depuis cette base, une extrémité ouverte, et une cavité intérieure allongée ;
une pluralité de pastilles d'appât insecticide empilées disposées à l'intérieur de la cavité, de sorte que des pastilles adjacentes sont connectées mécaniquement les unes aux autres ; et
un actionneur configuré pour provoquer un glissement d'au moins une partie d'une pastille placée le plus à l'extérieur de la pile vers l'extérieur depuis l'extrémité ouverte de façon à exposer au moins une première face de la pastille la plus extérieure qui est configurée pour être connectée sur la surface de montage, et ultérieurement rompue en éloignement de la pile.

2. Distributeur selon la revendication 1, dans lequel la première face comporte un adhésif exposé sur celle-ci.

3. Distributeur selon la revendication 1, dans lequel la pastille comprend en outre une deuxième face à l'opposé de la première face.

4. Distributeur selon la revendication 1, dans lequel au moins une pastille d'appât présente une section transversale rectangulaire dans sa surface la plus extérieure et dans sa surface la plus intérieure.

5. Distributeur selon la revendication 1, dans lequel au moins une pastille d'appât est tronconique.

6. Distributeur selon la revendication 3, dans lequel la deuxième face présente sur elle-même un bourrelet adhésif.

7. Distributeur selon la revendication 1, dans lequel un cône s'étend vers l'extérieur depuis une deuxième face d'au moins une pastille à l'opposé de la première face, le cône étant connecté par voie adhésive sur une encoche ménagée dans une pastille adjacente.

8. Distributeur selon la revendication 1, dans lequel au moins une pastille comprend une cavité intérieure enfermant à l'intérieur un adhésif liquide, la cavité présentant une sortie vers une face de la pastille.

9. Distributeur selon la revendication 8, dans lequel la pastille comportant l'adhésif liquide est compressible de sorte que lors d'une compression le liquide adhésif l'adhésif liquide sera projeté hors de la pastille.

10. Distributeur selon la revendication 9, dans lequel la sortie comprend une fente transversale allongée.

11. Distributeur selon la revendication 1, dans lequel au moins une pastille inclut une tige qui s'étend vers l'extérieur depuis la première face et qui est configurée de manière à être introduite dans une face d'une pastille adjacente.

12. Distributeur selon la revendication 11, dans lequel la tige s'étendant depuis la pastille la plus extérieure est configurée afin d'être attachée sur la surface de montage.

13. Distributeur selon la revendication 1, dans lequel au moins une pastille comprend un adhésif à froid du type ciment au caoutchouc.

14. Distributeur selon la revendication 1, dans lequel l'actionneur comprend un ressort pour pousser la pile vers l'extérieur à travers l'extrémité ouverte.

15. Distributeur selon la revendication 1, dans lequel une pastille au moins a une section transversale en forme de V.

16. Procédé pour monter une pastille d'appât insecticide sur une surface de montage comprenant les opérations consistant à :
procurer un distributeur selon la revendication 1 ;
mettre en contact la pastille la plus extérieure dans la pile de ce distributeur avec la surface de montage de façon à la positionner sur celle-ci ; et
rompre ultérieurement la pastille la plus extérieure depuis la pile.
